# EUROPÄISCHE PATENTANMELDUNG

(11) **EP 0 832 711 A2**
(43) Veröffentlichungstag der Anmeldung: **01.04.1998**
(21) Anmeldenummer: 97115967.8
(22) Anmeldetag: 13.09.1997
(51) Int. Cl.: B23K 11/26, B23K 11/25

(54) **Schweissgerät und Schweissverfahren, insbesondere Widerstandsschweissverfahren**

(30) Priorität: 25.09.1996 AT 1704/96
(71) Anmelder: Stempfer, Ferdinand Ing., 2020 Hollabrunn (AT)
(72) Erfinder: Stempfer, Ferdinand Ing., 2020 Hollabrunn (AT)
(74) Vertreter: Secklehner, Günter, Dr.

(57) **Zusammenfassung**

Die Erfindung betrifft ein Schweißgerät (1), insbesondere Widerstandsschweißgerät, bestehend aus einer Steuervorrichtung (2), einer Ladevorrichtung (10), zumindest einem Energiespeicher (22 bis 24), einer Schaltvorrichtung (33 bis 35) und einem Verbraucher (51), wobei der Energiespeicher (22 bis 24) zur Ladevorrichtung (10) parallel geschaltet ist und dieser und über die ihm zugeordnete Schaltvorrichtung (33 bis 35) und einer dieser nachgeordneten Übertragungsvorrichtung (31) mit dem Verbraucher (51), insbesondere einem Schweißbrenner (52) mit einer nichtabschmelzenden Elektrode (53) und einem Werkstück (54), verbunden ist. Mehrere Energiespeicher (22 bis 24) sind mit jeweils einer jedem derselben zugeordneten Schaltvorrichtung (33 bis 35) angeordnet und die Schaltvorrichtungen (33 bis 35) der Energiespeicher (22 bis 24) sind zwischen zwei Ladezyklen durch die Steuervorrichtung (2) zur unmittelbar aufeinanderfolgenden Abgabe von zumindest einem Teil der in jedem der Energiespeicher (22 bis 24) gespeicherten Energie an den Verbraucher (51) angesteuert.

## Beschreibung

Die Erfindung betrifft ein Schweißgerät sowie ein Verfahren zur Abgabe von mehreren Energieimpulsen an einem an einer Schweißstelle angeordneten Verbraucher, wie es im Oberbegriff der Ansprüche 1, 9 und 14 beschrieben ist.

Es sind bereits Schweißgeräte, insbesondere Widerstandsschweißgeräte, bekannt, bei denen durch Aktivieren einer Schaltvorrichtung von einer Steuervorrichtung eine in einem Energiespeicher gespeicherte Energie an einem Verbraucher angelegt wird. Der Energieimpuls kann dabei über eine Ein- und/oder Ausgabevorrichtung von dem Benutzer in seiner Amplitude sowie die Zeitdauer der Länge des Energieimpulses frei eingestellt werden. Nachdem der Energieimpuls an dem Verbraucher, insbesondere an einem Schweißbrenner, mit einer nichtabschmelzenden Elektrode und einem Werkstück angelegt wurde, wird von einer Ladevorrichtung der Energiespeicher mit Energie versorgt, sodaß dieser auf den entsprechenden Wert aufgeladen wird und ein neuerlicher Schweißprozeß durchgeführt werden kann. Nachteilig ist bei einem derartigen Schweißgerät, daß aufgrund eines Energieimpulses nur dünnes Zusatzmaterial, insbesondere dünne Stahlbleche bzw. ein relativ feinkörniges Metallpulver, verwendet werden kann, da zwischen dem Aussenden von zwei Energieimpulsen der Energiespeicher zuerst geladen werden muß, sodaß in dieser Zeit das Zusatzmaterial stark abkühlt und somit immer nur über eine gewisse Dicke das Zusatzmaterial aufgeschmolzen wird.

Der vorliegenden Erfindung liegt die Aufgabe zugrunde, ein Schweißgerät, insbesondere ein Widerstandsschweißgerät, sowie ein Verfahren zur Abgabe von mehreren Energieimpulsen an einem an einer Schweißstelle angeordneten Verbraucher zu schaffen, bei dem durch die unterschiedlichen Dicken der zu verschweißenden Materialien eine zumindest gleiche Schweißqualität erzielt werden kann.

Diese Aufgabe der Erfindung wird durch die Merkmale im Kennzeichenteil des Anspruches 1 gelöst. Vorteilhaft ist hierbei, daß aufgrund von mehreren aufeinanderfolgenden Energieimpulsen innerhalb eines Schweißprozesses eine wesentlich größere Aufschmelzung des Zusatzmaterials erreicht wird, sodaß ein wesentlich dickeres Zusatzmaterial bzw. grobkörnigeres Metallpulver verwendet werden kann. Ein weiterer nicht vorhersehbarer Vorteil liegt darin, daß aufgrund des Aussendens mehrere aufeinanderfolgende Energieimpulse eine exakte Steuerung des Ablaufes eines Schweißprozesses durchgeführt werden kann, sodaß die Schweißqualität bei einem derartigen Widerstandsschweißgerät wesentlich vergrößert wird.

Es ist auch eine Ausbildung nach den Ansprüchen 2 und 3 von Vorteil, da dadurch die Ladung der Energiespeicher unabhängig voneinander durchgeführt und eingestellt werden kann und somit unterschiedliche Energieimpulse an den Verbraucher angelegt werden können.

Von Vorteil ist auch eine Ausgestaltung nach Anspruch 4, da dadurch eine Anpassung an die verschiedensten Zusatzmaterialien bzw. Metallpulvern durchgeführt werden kann.

Weiters ist eine Ausgestaltung nach Anspruch 5 von Vorteil, da dadurch zum Stand der Technik zählende Baueinheiten verwendet werden können, wodurch Kosten bei der Herstellung des Schweißgerätes eingespart werden können.

Vorteilhaft ist auch eine Ausbildung nach Anspruch 6, da dadurch zu einem definierten Zeitpunkt ein Schweißprozeß durchgeführt werden kann.

Es ist auch eine Ausbildung nach den Ansprüchen 7 und 8 von Vorteil, da dadurch der Schweißprozeß während der Energieabgabe über die Elektrode überwacht werden kann, sodaß die Qualität der Schweißung verbessert werden kann.

Die Erfindung umfaßt weiters auch ein Verfahren zur Abgabe von mehreren Energieimpulsen an einem an einer Schweißstelle angeordneten Verbraucher, wie es im Oberbegriff des Anspruches 9 beschrieben ist.

Dieses Verfahren ist durch die Merkmale im Kennzeichenteil des Anspruches 9 gelöst. Vorteilhaft ist dabei, daß durch das Anlegen mehrerer aufeinanderfolgender Energieimpulse eine exakte Steuerung durch unterschiedliche Amplituden und Zeitdauern der Energieimpulse möglich ist, wodurch ein wesentlich dickeres Zusatzmaterial auf das Werkstück aufgetragen werden kann bzw. eine exakte Anpassung des Schweißprozesses an das Zusatzmaterial möglich ist.

Von Vorteil sind auch die Maßnahmen nach den Ansprüchen 10 bis 13 von, da dadurch eine exakte Steuerung des Ablaufes eines Schweißprozesses möglich ist, wodurch die Schweißqualität wesentlich erhöht werden kann.

Die Erfindung umfaßt weiters auch ein Verfahren zur Abgabe von zumindest einem Energieimpuls an einen an einer Schweißstelle angeordneten Verbraucher, wie es im Oberbegriff des Anspruches 14 beschrieben ist.

Dieses Verfahren ist durch die Merkmale im Kennzeichenteil des Anspruches 14 gelöst. Vorteilhaft ist hierbei, daß durch das Ermitteln des Übergangswiderstandes zwischen der Elektrode und dem Werkstück der für den Schweißprozeß benötigte Energieimpuls auf den Übergangswiderstand abgestimmt werden kann, sodaß ungewollte Einbrände und Schweißspritzer während des Schweißprozesses verhindert werden.

Weitere vorteilhafte Maßnahmen sind in den Ansprüchen 15 bis 19 beschrieben. Die damit erzielbaren Vorteile sind der detaillierten Figurenbeschreibung zu entnehmen.

Die Erfindung wird im nachfolgenden anhand der in den Zeichnungen dargestellten Ausführungsbeispiele näher erläutert.

Es zeigen:
- Fig. 1: ein Schaltschema eines erfindungsgemäßen Schweißgerätes in vereinfachter Darstellung;
- Fig. 2: ein Diagramm des Lade- und Entladezyklusses des erfindungsgemäßen Schweißgerätes nach Fig. 1;
- Fig. 3: ein weiteres Diagramm des Lade- und Entladezyklusses des erfindungsgemäßen Schweißgerätes nach Fig. 1;
- Fig. 4: ein anderes Diagramm des Lade- und Entladezyklusses des erfindungsgemäßen Schweißgerätes nach Fig. 1;
- Fig. 5: ein weiteres Ausführungsbeispiel eines Schaltschemas des erfindungsgemäßen Schweißgerätes in vereinfachter Darstellung;
- Fig. 6: ein Diagramm des Lade- und Entladezyklusses des erfindungsgemäßen Schweißgerätes nach Fig. 5;
- Fig. 7: ein weiteres Diagramm des Lade- und Entladezyklusses des erfindungsgemäßen Schweißgerätes nach Fig. 5;

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z. B. oben, unten, seitlich usw., auf die unmittelbar beschriebenen sowie dargestellte Figur bezogen und sind bei einer Lageänderung sinngemäß auf die neue Lage zu übertragen. Weiters können auch Einzelmerkmale aus den gezeigten unterschiedlichen Ausführungsbeispielen für sich eigenständige erfindungsgemäße Lösungen darstellen.

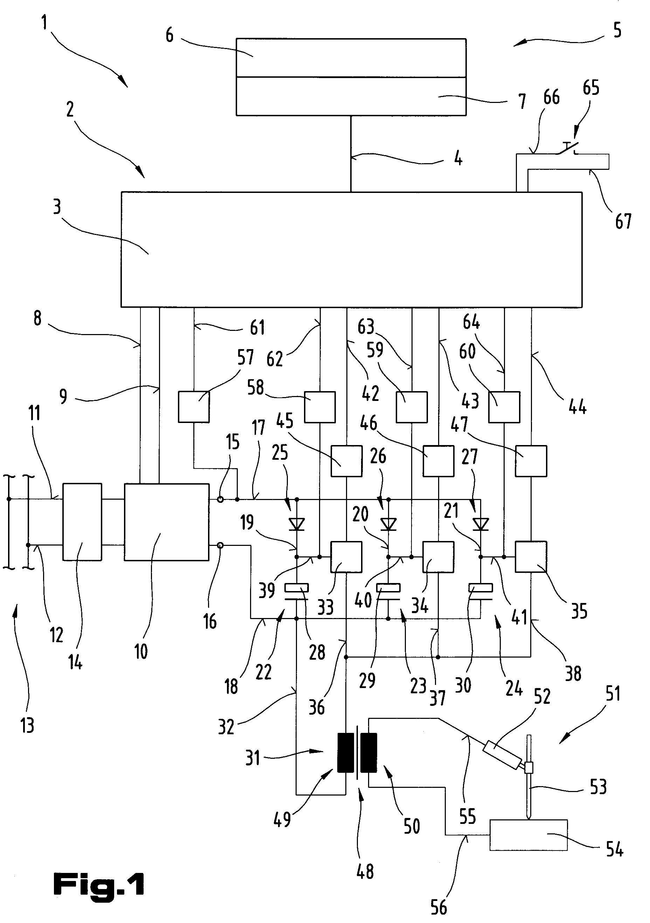

In Fig. 1 ist ein Blockschaltbild für ein erfindungsgemäßes Schweißgerät 1, insbesondere für ein Widerstandsschweißgerät, gezeigt. Das Schweißgerät 1 weist eine Steuervorrichtung 2, insbesondere eine Mikroprozessorsteuerung 3, auf. Die Mikroprozessorsteuerung 3 wird dabei durch einen internen Speicher sowie mehreren Ein- und/oder Ausgängen gebildet. In dem internen Speicher ist ein für die Mikroprozessorsteuerung 3 notwendiges Softwareprogramm hinterlegt, wodurch eine Steuerung der einzelnen Ein- und/oder Ausgänge über das Softwareprogramm von der Mikroprozessorsteuerung 3 durchgeführt werden kann.

An einem der Ein- und/oder Ausgänge der Mikroprozessorsteuerung 3 ist über eine Leitung 4 eine Ein- und/oder Ausgabevorrichtung 5 angeordnet. Die Ein- und/oder Ausgabevorrichtung 5 kann dabei aus einer LCD-Anzeige 6 sowie einem Bedienerfeld 7 gebildet werden. Grundsätzlich sei zu der Anordnung der Ein- und/oder Ausgabevorrichtung 5 gesagt, daß diese über mehrere Leitungen 4 angesteuert wird, wobei jedoch in dem dargestellten Blockschaltbild nur eine Leitung 4 für die Ein- und/oder Ausgabevorrichtung 5 bzw. für die LCD-Anzeige 6 oder dem Bedienerfeld 7 dargestellt ist. Die LCD-Anzeige 6 zeigt dabei die über das Softwareprogramm in der Mikroprozessorsteuerung 3 ablaufende Zustände bzw. die voreingestellten Werte für einen Schweißprozeß an. Über das Bedienerfeld 7 kann ein Benutzer mehrere Funktionen des Softwareprogrammes beeinflussen, d.h., daß durch diverse Schalter bzw. eine Tastatur von dem Benutzer das Schweißgerät 1 an einen bestimmten Schweißprozeß angepaßt werden kann. Der Benutzer kann die verschiedensten Parameter, wie beispielsweise einen Stromwert, für einen bevorstehenden Schweißprozeß einstellen.

Die Mikroprozessorsteuerung 3 ist über Versorgungsleitungen 8, 9 mit einer Ladevorrichtung 10 verbunden, sodaß über die Ladevorrichtung 10 die Mikroprozessorsteuerung 3 mit Energie versorgt werden kann. Die Ladevorrichtung 10 kann dabei aus jeder beliebigen zum Stand der Technik zählenden Stromquelle, beispielsweise durch eine Inverterstromquelle, gebildet werden. Weiters ist die Ladevorrichtung 10 über Leitungen 11, 12 mit einem Spannungsversorgungsnetz 13 unter Zwischenschaltung einer Filteranordnung 14 verbunden. Das Spannungsversorgungsnetz 13 kann dabei aus einem Netz eines Elektroversorgungsunternehmens oder eines mobilen Stromgenerators gebildet werden.

Die Ladevorrichtung 10 weist zwei Ausgänge 15, 16, an die jeweils eine Ladeleitung 17, 18 angeordnet ist, auf. Parallel zu den Ausgängen 15, 16 sind über Leitungen 19 bis 21 Energiespeicher 22 bis 24 mit den Ladeleitungen 17, 18 verbunden, wodurch die Energiespeicher 22 bis 24 parallel zu den Ausgängen 15, 16 der Ladevorrichtung 10 angeordnet sind. Zwischen den Energiespeichern 22 bis 24 und der Ladeleitung 17 sind Dioden 25 bis 27 in Durchlaßrichtung zu den Energiespeichern 22 bis 24 angeordnet, sodaß von der Ladevorrichtung 10 an die Ladeleitung 17 das positive Potential und an die Ladeleitung 18 das negative Potential angelegt wird und somit ein Stromkreis über die Energiespeicher 22 bis 24 aufgebaut werden kann. Die Energiespeicher 22 bis 24 können aus Elkos 28 bis 30 gebildet werden. Vorteilhaft ist beim Einsatz eines Elkos 28 bis 30 als Energiespeicher 22 bis 24, daß ein rasches Laden bzw. Entladen der in den Energiespeicher 22 bis 24 bzw. in den Elkos 28 bis 30 gespeicherten Energie erfolgen kann. Selbstverständlich ist es möglich, daß jeder beliebige Energiespeicher, wie beispielsweise eine Batterie als Energiespeicher 22 bis 24 eingesetzt werden kann.

Ein Ausgang einer Übertragungsvorrichtung 31 ist über eine Leitung 32 mit der Ladeleitung 18 verbunden. Der Eingang der Übertragungsvorrichtung 31 ist jeweils mit einem Ausgang einer für jeden Energiespeicher 22 bis 24 zugeordneten Schaltvorrichtung 33 bis 35 über eine Leitung 36 bis 38 verbunden. Der Eingang der Schaltvorrichtungen 33 bis 35 ist jeweils über eine Leitung 39 bis 41 zwischen dem entsprechenden Energiespeicher 22 bis 24 und der dazugehörigen Dioden 25 bis 27 mit der entsprechenden Leitung 19 bis 21 verbunden, sodaß jeweils ein Stromkreis mit den Energiespeichern 22 bis 24 über die Schaltvorrichtungen 33 bis 35 und der Übertragungsvorrichtung 31 aufgebaut werden kann.

Damit die Schaltvorrichtungen 33 bis 35 für die einzelnen Energiespeicher 22 bis 24 exakt gesteuert werden können, sind die Schaltvorrichtungen 33 bis 34 mit ihren Steuereingängen über Leitungen 42 bis 44, beispielsweise unter Zwischenschaltung eines Optokoplers 45 bis 47, mit den Ein- und/oder Ausgängen der Steuervorrichtung 2, insbesondere der Mikroprozessorsteuerung 3, verbunden, sodaß durch Aktivierung der entsprechenden Ein- und/oder Ausgänge der Mikroprozessorsteuerung 3 die Schaltvorrichtungen 33 bis 35 aktiviert werden können. Die Schaltvorrichtungen 33 bis 35 können beispielsweise aus IGBT's, Transistoren usw. gebildet werden.

Die Übertragungsvorrichtung 31 kann dabei aus einem zum Stand der Technik zählenden Trafo 48 mit einer Primärspule 49 und einer Sekundärspule 50 gebildet werden. Das Übersetzungsverhältnis des Trafos 48 kann dabei zwischen 1 : 20 und 1 : 80, bevorzugt 1 : 50, liegen. Die Primärspule 49 ist mit den Leitungen 32 und 36 bis 38 verbunden, wogegen an die Sekundärspule 50 des Trafos 48 ein Verbraucher 51, insbesondere ein Schweißbrenner 52 mit einer nichtabschmelzenden Elektrode 53, und ein Werkstück 54 angeschlossen ist, d.h., daß durch das Übertragen der von den Energiespeichern 22 bis 24 gelieferten Energie von der Primärspule 49 an die Sekundärspule 50 der Verbraucher 51 über Leitungen 55, 56 mit Energie versorgt wird, wobei an die Leitung 55 das positive Potential und an die Leitung 56 das negative Potential angelegt wird.

Damit nun eine Steuerung des Schweißgerätes 1 von der Steuervorrichtung 2, insbesondere der Mikroprozessorsteuerung 3, durchgeführt werden kann, sind über Ein- und/oder Ausgänge der Mikroprozessorsteuerung 3 verschiedene Meßvorrichtung 57 bis 60, beispielsweise zum Überwachen der Spannungen der einzelnen Komponenten, angeordnet. Die Meßvorrichtungen 57 bis 60 sind über Leitungen 61 bis 64 an den Ein- und /oder Ausgängen der Steuervorrichtung 2 angeschlossen. Die Leitung 61 wird dabei zum Messen der Ladespannung mit der Ladeleitung 17 verbunden. Die Leitungen 62 bis 64 der Meßvorrichtungen 58 bis 60 sind zum Überwachen des Stromkreises über die Energiespeicher 22 bis 24 mit den Leitungen 39 bis 41 verbunden, wobei das Entladen der Energiespeicher 22 bis 24 über die einzelnen Meßvorrichtungen 58 bis 60 von der Steuervorrichtung 2, insbesondere der Mikroprozessorsteuerung 3, überwacht werden kann. Durch das Anordnen der Meßvorrichtungen 58 bis 60 kann von der Mikroprozessorsteuerung 3 eine ständige Überwachung der Zustände an den Energiespeichern 22 bis 24 durchgeführt werden, sodaß bei Auftreten eines Fehlers während des Schweißprozesses bzw. während des Ladezyklusses die Mikroprozessorsteuerung 3 ein Signal aussenden kann, wodurch der Benutzer aufmerksam gemacht wird, daß bei dem letzten Schweißprozeß ein Fehler aufgetreten ist. Selbstverständlich ist es möglich, daß an der LCD-Anzeige 6 diese Fehler von der Mikroprozessorsteuerung 3 angezeigt werden kann.

Weiters ist es möglich, daß ein Startschalter 65 über Leitungen 66, 67 mit den Ein- und/oder Ausgängen der Steuervorrichtung 2 verbunden ist. Dieser Startschalter 65 wird bevorzugt im Schweißbrenner 52 angeordnet, sodaß beim Benutzen des Schweißgerätes 1 der Bediener durch Betätigung des Startschalters 65 einen Schweißprozeß starten kann.

Nachdem das Schweißgerät 1 an das Spannungsversorgungsnetz 13 angeschlossen wurde, kann mit dem Schweißgerät 1 ein Schweißprozeß durchgeführt werden. Dazu kann der Benutzer des Schweißgerätes 1 die entsprechenden Parametern, wie beispielsweise die Höhe der Ausgangsleistung, die Zeitdauer eines Energieimpulses sowie die Pausen zwischen den einzelnen Energieimpulsen, einstellen.

Nachdem der Benutzer die einzelnen Parameter für den Schweißprozeß eingestellt hat, kann er über den Startschalter 65 einen Schweißprozeß starten. Der Schweißprozeß für ein derartiges Schweißgerät 1 erfolgt dabei so, daß der Benutzer beispielsweise die Elektrode 53 in ein Metallpulver eintaucht, wodurch das Metallpulver an der Elektrode 53 haftet. Anschließend berührt der Benutzer das Werkstück 54 mit der Elektrode 53, sodaß durch Betätigung des Startschalters 65 ein Energieimpuls vom Schweißgerät 1 an die Elektrode 53 abgesandt wird, wodurch ein Aufschmelzen des Werkstückes 54 und des Metallpulvers erzielt wird, sodaß ein Werkstoffübergang zwischen dem Zusatzmaterial, insbesondere dem Metallpulver, und dem Werkstück 54 erzielt wird.

Selbstverständlich ist es möglich, daß anstelle eines Metallpulvers entsprechendes Zusatzmaterial, wie beispielsweise Stahlblech, auf das Werkstück 54 aufgelegt werden kann, worauf der Benutzer auf das Zusatzmaterial die Elektrode 53 auflegt und durch Betätigung des Startschalters 65 wiederum einen Energieimpuls von der Elektrode 53 an das Werkstück 54 übergibt, sodaß ein Aufschmelzen des Zusatzmaterials erfolgt. Dabei ist es möglich, daß der Benutzer die entsprechende Energie des Energieimpulses, insbesondere eines Stromimpulses bzw. eines Spannungsimpulses, beliebig einstellen kann, sodaß der Benutzer eine Anpassung an die verschiedensten Zusatzmaterialien bzw. an das Metallpulver durchführen kann.

Das Aussenden des Energieimpulses mit dem erfindungsgemäßen Schweißgerät 1 erfolgt dabei so, daß durch Betätigung des Startschalters 65 der Steuervorrichtung 2 mitgeteilt wird, daß ein Schweißprozeß durchgeführt werden soll. Dabei ist es möglich, daß durch einmaliges Betätigen des Startschalters 65 nur ein Schweißvorgang mit mehreren, aufeinanderfolgenden, an die Elektrode 53 angelegten Energieimpulsen durchgeführt wird, wogegen bei ständiger Schließung des Startschalters 65 ein Taktbetrieb vom Benutzer ausgewählt werden kann, d.h., daß ein ständiges Wiederholen des Schweißvorganges mit mehreren aufeinanderfolgenden Energieimpulsen durchgeführt wird.

Nachdem der Benutzer den Startschalter 65 betätigt hat bzw. bei der Inbetriebnahme des Schweißgerätes 1 wird von der Steuervorrichtung 2 bzw. von der Mikroprozessorsteuerung 3 über eine oder mehrere nicht dargestellte Steuerleitungen ein Impuls bzw. Signal an die Ladevorrichtung 10 ausgesandt, indem der Ladevorrichtung 10 mitgeteilt wird, daß ein Laden der Energiespeicher 22 bis 24 erfolgen soll. Daraufhin legt die Ladevorrichtung 10 auf die Ladeleitung 17 und 18 Energie an, sodaß die Energiespeicher 22 bis 24 mit der entsprechenden Energie aufgeladen werden. Dabei ist es möglich, daß durch Einstellen eines bestimmten Stromwertes die Energiespeicher 22 bis 24 entsprechend mit diesem Wert geladen werden. Damit jedoch eine unterschiedliche Ladung der Energiespeicher 22 bis 24 durchgeführt werden kann, ist es möglich, daß die Mikroprozessorsteuerung 3 über die nicht dargestellten Steuerleitungen seriell einen bestimmten Code aussendet, wodurch entsprechend diesem Code die Ladevorrichtung 10 die entsprechende Energie zum Laden der Energiespeicher 22 bis 24 einstellt. Selbstverständlich ist es möglich, daß anstelle von seriellen Codes eine Parallelverbindung mit der Mikroprozessorsteuerung 3 erfolgen kann, wodurch jedoch mehrere Steuerleitungen zwischen der Mikroprozessorsteuerung 3 und der Ladevorrichtung 10 angeordnet sein müssen oder daß aufgrund der Höhe eines Spannungssignals an der Steuerleitung eine entsprechende Ladung der Energiespeicher 22 bis 24 erfolgt.

Nachdem die Energiespeicher 22 bis 24 über eine für den entsprechenden Ladewert errechnete bzw. voreingestellte Zeitdauer aufgeladen wurde, ist es möglich, daß von der Ladevorrichtung 10 über eine nicht dargestellte Steuerleitung ein Rücksignal an die Mikroprozessorsteuerung 3 ausgesandt wird, wodurch die Mikroprozessorsteuerung 3 erkennen kann, daß die Energiespeicher 22 bis 24 vollständig geladen sind. Daraufhin steuert die Mikroprozessorsteuerung 3 die erste Schaltvorrichtung 33 über eine voreinstellbare Zeitdauer an, sodaß durch Durchschalten der Leitung 39 auf die Leitung 36 ein Entladen des Energiespeichers 22 über die Übertragungsvorrichtung 31 erfolgt. Durch das Entladen des Energiespeichers 22 über die Übertragungsvorrichtung 31 wird erreicht, daß eine galvanisch getrennte Übertragung von der Primärspule 49 auf die Sekundärspule 50 erfolgt und somit ein Energieimpuls mit der entsprechenden Zeitdauer an die Elektrode 53 angelegt wird. Durch das Anlegen des Energieimpulses an die Elektrode 53 wird das auf der Elektrode 53 aufgebrachte Metallpulver bzw. das auf das Werkstück 54 aufgelegte Zusatzmaterial erwärmt, wodurch ein Werkstoffübergang von dem Metallpulver bzw. dem Zusatzmaterial an das Werkstück 54 erreicht wird.

Nach Ablauf einer gewissen, voreinstellbaren Zeitdauer nimmt die Mikroprozessorsteuerung 3 das Signal von der Leitung 42, wodurch die Schaltvorrichtung 33 deaktiviert wird. Anschließend, nach Ablauf einer weiteren voreinstellbaren Zeitdauer, steuert die Mikroprozessorsteuerung 3 die weitere Schaltvorrichtung 34 über die Leitung 43 an, sodaß nunmehr der Energiespeicher 23 über die Übertragungsvorrichtung 31 entladen wird und somit ein neuerlicher Energieimpuls an der Elektrode 53 erzeugt wird. Daraufhin deaktiviert die Mikroprozessorsteuerung 3 die Schaltvorrichtung 34 und steuert nach Ablauf einer voreingestellten Zeitdauer die weitere Schaltvorrichtung 35 an, sodaß der dritte aufeinanderfolgende Energieimpuls an die Elektrode 53 angelegt wird. Nachdem alle Energiespeicher 22 bis 24 über die Übertragungsvorrichtung 31 bzw. der Elektrode 53 entladen wurden, sendet die Mikroprozessorsteuerung 3 wiederum ein Signal über die Steuerleitung an die Ladevorrichtung 10, sodaß ein neuerliches Aufladen der Energiespeicher 22 bis 24 über eine errechnete bzw. voreingestellte Zeitdauer erfolgt. Selbstverständlich ist es möglich, daß während des Entladens der einzelnen Energiespeicher 22 bis 24 eine gleichzeitige Ladung dieser Energiespeicher 22 bis 24 erfolgen kann. Dies hat den Vorteil, daß dadurch ein rascheres Aufladen der einzelnen Energiespeicher 22 bis 24 erzielt wird und somit der Ladezyklus nach dem Abgeben der gespeicherten Energie der Energiespeicher 22 bis 24 verkürzt werden kann.

Hat nunmehr der Benutzer den Startschalter 65 noch immer aktiviert, so wird der Mikroprozessorsteuerung 3 mitgeteilt, daß ein Taktbetrieb mit dem Schweißgerät 1 durchgeführt werden soll, d.h., daß nach dem Aufladen der Energiespeicher 22 bis 24 abermals die Energiespeicher 22 bis 24 über die Übertragungsvorrichtung 31 ohne zusätzliches Betätigen des Startschalters 65 entladen werden sollen. Ist jedoch der Startschalter 65 vom Benutzer geöffnet worden, so wird nach dem neuerlichen Aufladen der Energiespeicher 22 bis 24 der Schweißprozeß unterbrochen.

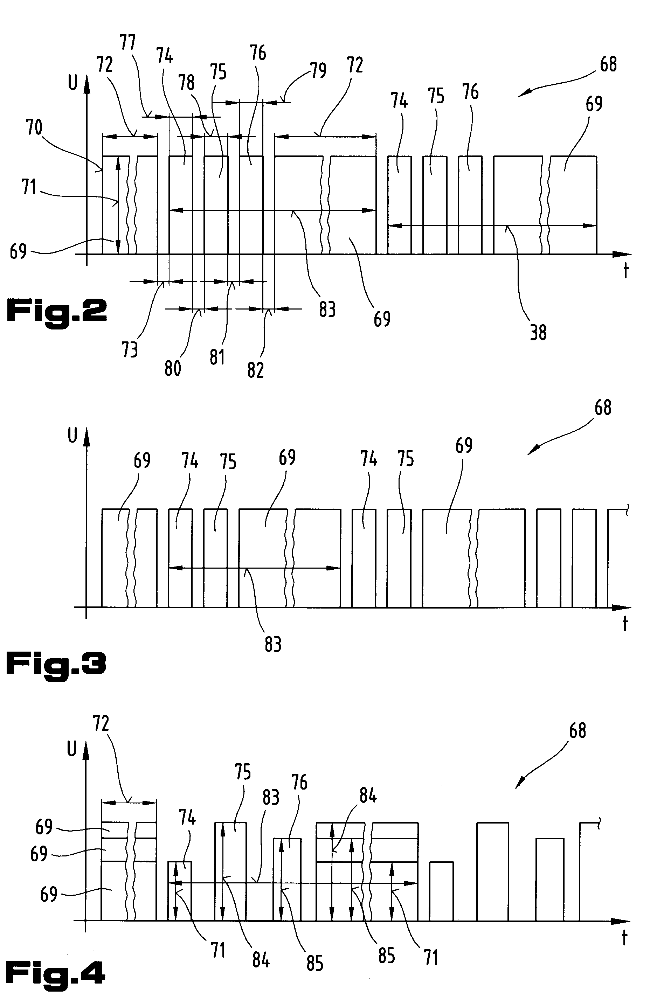

Bei einem derartigen Schweißgerät 1 ist es möglich, daß der Benutzer verschiedene Zustände für das Aussenden der Energieimpulse an die Elektrode 53 einstellen kann. Dabei ist es möglich, daß der Benutzer die Höhe des Stroms bzw. der Spannung, die Zeitdauer, wie lange der Energieimpuls dauern soll, die Zeitdauer der Pausen zwischen zwei aufeinanderfolgenden Energieimpulsen und die Zeitdauer des Ladezyklusses über das Bedienerfeld 7 frei einstellen kann, wie dies in den nachstehenden Diagrammen der Fig. 2 bis 4 dargestellt ist.

Aus den dargestellten Diagrammen der Fig. 2 bis 4 ist ein Schweißprozeß des erfindungsgemäßen Schweißgerätes 1 durch eine Ausgangskennlinie 68 dargestellt. An den Diagrammen sind auf der Ordinate die Spannung U und auf der Abszisse die Zeit t aufgetragen. Die Ausgangskennlinien 68 werden direkt an den Ausgängen des Sekundärteils, also der Sekundärspule 50 des Trafos 48, gemessen.

Bei der Inbetriebnahme des Schweißgerätes 1, also beim Verbinden der Ladevorrichtung 10 mit dem Spannungsversorgungsnetz 13, können von der Ladevorrichtung 10 zuerst die Energiespeicher 22 bis 24 geladen werden, sodaß der Benutzer jederzeit einen Schweißprozeß mit dem Schweißgerät 1 durchführen kann. Selbstverständlich ist es möglich, daß erst nach Einstellen der einzelnen Parameter die Energiespeicher 22 bis 24 von der Ladevorrichtung 10 geladen werden.

Ein Ladezyklus 69 wird beispielsweise zum Zeitpunkt 70 von der Mikroprozessorsteuerung 3 durch das Beaufschlagen der Steuerleitung gestartet. Dieser Ladezyklus 69 weist eine für den nachfolgenden Schweißprozeß benötigte Amplitude 71 auf, d.h., daß aufgrund dieser Höhe der Amplitude 71 die Energiespeicher 22 bis 24 mit derselben Amplitudenhöhe geladen werden. Der Ladevorgang, insbesondere des Ladezyklusses 69, kann dabei über eine voreinstellbare Zeitdauer 72 vom Benutzer frei gewählt werden bzw. kann die Einstellung der Zeitdauer 72 direkt von der Mikroprozessorsteuerung 3 oder von der Ladevorrichtung 10 aufgrund der festgelegten Amplitude 71 selbständig errechnet werden. Nach Ablauf der Zeitdauer 72 sind alle Energiespeicher 22 bis 24 mit dem selben Energiepotential aufgeladen, sodaß vom Benutzer jederzeit ein Schweißprozeß durchgeführt werden kann.

Es ist jedoch erforderlich, nach dem Abschluß des Ladezyklusses 69 eine bestimmte Zeitdauer 73 abzuwarten, bevor ein Energieimpuls 74 an die Elektrode 53 angelegt wird. Dies ist deshalb notwendig, da innerhalb dieser Zeitdauer 73 die Ladevorrichtung 10 ein Signal an die Mikroprozessorsteuerung 3 für das Beenden des Ladezyklusses 69 übergibt. Hat der Benutzer den Startschalter 65 gedrückt, so kann nach Ablauf der Zeitdauer 73 ein Schweißprozeß durchgeführt werden. Dazu werden mehrere Energieimpulse 74 bis 76 aufeinanderfolgend an die Elektrode 53 durch das Aktivieren und Deaktivieren der Schaltvorrichtungen 33 bis 35 angelegt. Dabei kann der Benutzer wiederum eine Zeitdauer 77 bis 79 der einzelnen Energieimpulse 74 bis 76 sowie eine Zeitdauer 80 bis 82 der Pausen zwischen den einzelnen Energieimpulsen 74 bis 76 bzw. zwischen dem letzten Energieimpuls 76 und dem nachfolgenden Ladezyklus 69 frei einstellen.

Nachdem ein Schweißvorgang beendet wurde, d.h., daß alle drei Energieimpulse 74 bis 76 an die Elektrode 53 angelegt wurden, wird ein neuerlicher Ladezyklus 69 für die Energiespeicher 22 bis 24 durchgeführt, sodaß ein neuerlicher Schweißvorgang durchgeführt werden kann.

Es kann nunmehr gesagt werden, daß ein Schweißvorgang bzw. ein Schweißprozeß vom Aussenden des ersten Energieimpulses 74 bis zum Beenden des Ladezyklusses 69 andauert. Dabei ist es möglich, daß eine den Schweißvorgang dauernde Zeitdauer 83 vom Benutzer ebenfalls frei einstellbar ist, sodaß eine automatische Berechnung der einzelnen Energieimpulse 74 bis 76 sowie der unterschiedlichen Zeitdauern 77 bis 82 aufgrund einer vorgegebenen Höhe der Amplitude 71 von der Mikroprozessorsteuerung 3 durchgeführt wird.

Bei einem Taktbetrieb wird nach Beendigung des Schweißvorganges, also nach Ablauf der Zeitdauer 83, ein weiterer Schweißvorgang gestartet, wodurch eine kontinuierliche Schweißung mit dem Schweißgerät 1 durchgeführt werden kann. Selbstverständlich ist es möglich, daß nur einzelne Schweißvorgänge über eine Zeitdauer 83 vom Benutzer ausgewählt werden können, sodaß zwischen dem Beginn eines Schweißvorganges mit der Zeitdauer 83 zu einem neuerlichen Schweißvorgang, wiederum mit der gleichen oder einer anderen Zeitdauer 83, eine längere Pause dazwischen liegen kann. Dabei ist es jedoch erforderlich, daß die Energiespeicher 22 bis 24 ständig auf dem selben Energiewert gehalten werden, wodurch eine kontinuierliche Ladung, also eine Aufrechterhaltung der Energie in den Energiespeichern 22 bis 24, von der Ladevorrichtung 10 durchgeführt wird, die erst beim Betätigen des Startschalters 65 unterbrochen wird und nach Ablauf der Zeitdauer 73 der Schweißprozeß gestartet wird. Der Benutzer hat weiters die Möglichkeit, die Anzahl der aufeinanderfolgenden Schweißvorgänge mit der Zeitdauer 83 einzustellen, sodaß nach Durchführung aller Schweißvorgänge bzw. Schweißprozesse von der Steuervorrichtung 2 ein automatisches Abbrechen des Schweißvorganges erfolgt. Weiters ist es möglich, die Anzahl der aufeinanderfolgenden Energieimpulse 74 bis 76 auszuwählen.

Wie nun besser aus Fig. 3 ersichtlich ist, ist es möglich, daß der Benutzer des Schweißgerätes 1 einen Schweißvorgang mit der Zeitdauer 83 so auswählen kann, daß anstelle von drei Energieimpulsen 74 bis 76 nur mehr zwei Energieimpulse 74, 75 ausgesandt werden, wobei wiederum alle für diese Ausgangskennlinie 68 angegebenen Parameter über das Bedienerfeld 7 vom Benutzer frei einstellbar sind.

Wie aus Fig. 4 ersichtlich ist, ist es auch möglich, daß für die unterschiedlichsten Energieimpulse 74 bis 76 unterschiedliche Amplituden 71, 84, 85 und unterschiedliche Zeitdauern 77 bis 82 festgelegt werden können. Die Zeitdauer 83 des Schweißvorganges wird dabei vom Benutzer selbst oder von der Mikroprozessorsteuerung 3 festgelegt. Bei einer derartigen Ausbildung des Schweißgerätes 1 ist es jedoch erforderlich, daß für jeden Energiespeicher 22 bis 24 eine eigene Ladevorrichtung 10 vorhanden ist, sodaß eine unabhängige Ladung der Energiespeicher 22 bis 24 von den einzelnen Ladevorrichtungen 10 mit den entsprechenden Amplituden 71, 84, 85 durchgeführt werden kann.

Selbstverständlich ist es möglich, daß anstelle von zwei oder drei Energieimpulsen 74 bis 76 weitere Energieimpulse 74 bis 76, beispielsweise vier bis sechs Energieimpulse 74 bis 76, innerhalb der Zeitdauer 83 für einen Schweißvorgang an die Elektrode 53 angelegt werden können. Dabei ist es jedoch erforderlich, daß für jeden Energieimpuls 74 bis 76 ein eigener Energiespeicher 22 bis 24 im Schweißgerät 1 angeordnet sein muß. Ist es dann noch erforderlich, daß unterschiedliche Amplituden 71, 84, 85 vom Benutzer frei einstellbar sein müssen, so muß für jeden Energiespeicher 22 bis 24 wiederum eine eigene Ladevorrichtung 10 angeordnet sein.

Es ist jedoch auch möglich, daß mit nur einer Ladevorrichtung 10 die Energiespeicher 22 bis 24 mit unterschiedlichen Amplituden 71, 84, 85 geladen werden können, wobei die Ladevorrichtung 10 dann derart ausgebildet sein muß, daß eine automatische Umschaltung des Ausganges der Ladevorrichtung 10 an die einzelnen Energiespeicher 22 bis 24 durchgeführt werden kann, d.h., daß die Energiespeicher 22 bis 24 nicht parallel zueinander angeordnet sind, sondern daß diese über eine in der Ladevorrichtung 10 angeordnete Schaltvorrichtung aufeinanderfolgend von der Ladevorrichtung 10 geladen werden.

Weiters ist möglich, daß zwischen den Energiespeichern 22 bis 24 und der Diode 25 bis 27 eine weitere Schaltvorrichtung angeordnet ist, sodaß durch aufeinander folgendes Aktivieren der Schaltvorrichtungen ein serielles Laden der Energiespeicher 22 bis 24 mit unterschiedlichen Amplituden 71, 84, 85 von der Ladevorrichtung 10 durchgeführt werden kann.

Vorteilhaft ist bei einem derartigen Schweißgerät 1, daß durch die Anordnung mehrerer Energieimpulse 74 bis 76 in einem Schweißvorgang, also in der Zeitdauer 83, ein größeres Aufschmelzen des Zusatzmaterials erreicht wird, da durch das unmittelbare aufeinanderfolgende Aussenden der Energieimpulse 74 bis 76 das Zusatzmaterial stärker erwärmt wird, sodaß ein gegenüber einem aus dem Stand der Technik bekannten Widerstandsschweißgerät dickeres Zusatzmaterial oder grobkörnigeres Metallpulver verwendet werden kann.

Weiters ist es möglich, daß durch die Anordnung von mehreren aufeinanderfolgenden Energieimpulsen 74 bis 76 durch unterschiedliche Amplituden 71, 84, 85 eine exakte Anpassung an das Zusatzmaterial durchgeführt werden kann. Dabei ist es von Vorteil, daß beispielsweise mit dem Energieimpuls 74 ein Vorerwärmen des Zusatzmaterials getätigt wird, d.h., daß die Amplitude 71 unterhalb des Schmelzpunktes des Zusatzmaterials ausgewählt wird, wogegen der weitere Energieimpuls 75 mit einer Amplitude 84, die über dem Schmelzpunkt des Zusatzmaterials liegt, ausgesendet wird, sodaß ein Werkstoffübergang mit dem Energieimpuls 75 erreicht wird und mit dem anschließenden Energieimpuls 76 ein langsames Abkühlen des Zusatzmaterials durch Einstellen der Amplitude 85 wiederum unterhalb des Schmelzpunktes des Zusatzmaterials möglich ist, wodurch ein einwandfreier Werkstoffübergang zwischen dem Werkstück 54 und dem Zusatzmaterial geschaffen wird.

Bei dem beschriebenen Schweißgerät 1 und dem dazugehörigen Verfahren ist es weiters möglich, daß während des Betriebes des Schweißgerätes 1 der Stromsollwert für den Schweißprozeß vom Benutzer jederzeit verändert werden kann. Sind die Energiespeicher 22 bis 24 dabei auf einen bestimmten Wert aufgeladen und stellt der Benutzer einen Stromsollwert unter diesem Wert ein, so werden die Energiespeicher 22 bis 24 über eine zum Stand der Technik zählende und nicht dargestellte Entladeschaltung entladen und anschließend auf den neuen Stromsollwert wieder aufgeladen. Selbstverständlich ist es möglich, daß die Energiespeicher 22 bis 24 nicht vollständig entladen werden, sondern nur soweit entladen werden, bis die gespeicherte Energie mit dem neuen Stromsollwert übereinstimmt. Erhöht jedoch der Benutzer den eingestellten Stromsollwert, so werden die Energiespeicher 22 bis 24 durch Erhöhung der Energie von der Ladevorrichtung 10 weiter aufgeladen, sodaß eine Übereinstimmung mit dem neuen Stromsollwert gegeben ist.

Selbstverständlich ist es möglich, daß die Energiespeicher 22 bis 24 nur teilweise, entsprechend eines vorgegebenen Sollwertes, entladen werden, wobei dazu das Überwachen des Entladevorganges durch die Meßvorrichtungen 58 bis 60 erfolgt.

Weiters ist es möglich, daß die Mikroprozessorsteuerung 3 durch Einstellen nur des Stromsollwertes die weiteren Parameter für einen Schweißprozeß automatisch berechnet, d.h., daß die Mikroprozessorsteuerung 3 die Zeitdauer 77 bis 79 der Energieimpulse 74 bis 76, die Zeitdauer 73, 80 bis 82 der Pausen zwischen den Energieimpulsen 74 bis 76 und die Zeitdauer 72 für den Ladezyklus 69 selbständig festlegt bzw. berechnet, wobei jedoch einzelne Parameter anschließend noch von dem Benutzer geändert werden können. Dabei ist es auch möglich, daß anschließend nach Änderung einzelner Parameter eine neue Berechnung von der Mikroprozessorsteuerung 3 durchgeführt werden kann.

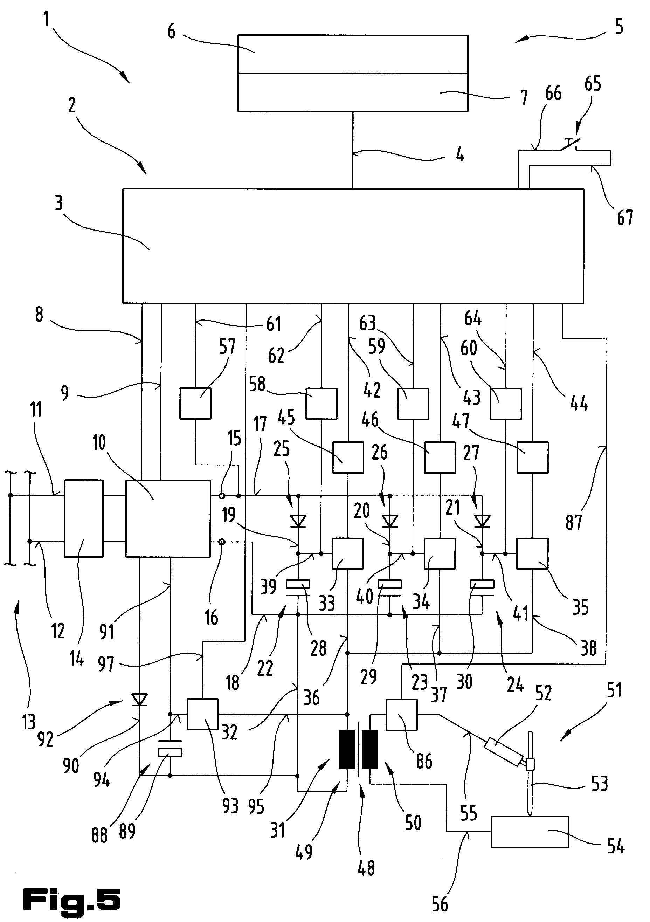

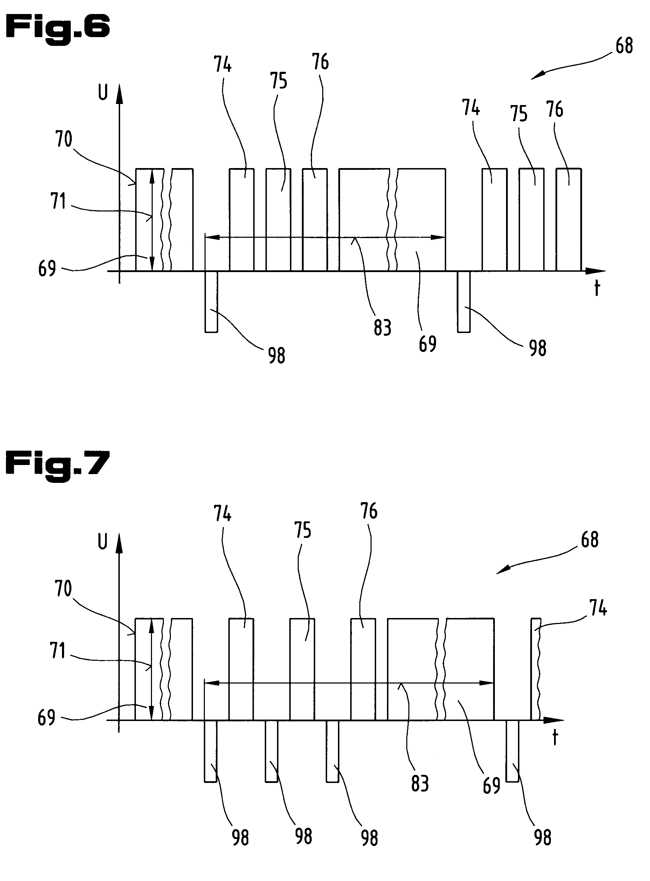

In den Fig. 5 bis 7 ist eine weitere Ausführungsvariante des erfindungsgemäßen Schweißgerätes 1 gezeigt, wobei für dieselben Teile der zuvor beschriebenen Figuren dieselben Bezugszeichen verwendet werden. In Fig. 5 ist ein Schaltschema des erfindungsgemäßen Schweißgerätes 1 gezeigt, wogegen in den Figuren 6 und 7 jeweils ein unterschiedlicher Verfahrensablauf für das Schweißgerät 1 dargestellt ist.

Der Unterschied zu dem in Fig. 1 beschriebenen Schweißgerät 1 liegt nunmehr darin, daß zwischen der Übertragungsvorrichtung 31, also den Trafo 48, und dem Schweißbrenner 52, insbesondere der Elektrode 53, eine Sensorvorrichtung 86 zwischengeschaltet ist. Die Sensorvorrichtung 86 ist über eine Leitung 87 mit der Steuervorrichtung 2, insbesondere der Mikroprozessorsteuerung 3, verbunden. Die Funktion der Sensorvorrichtung 86 liegt darin, daß der in der Leitung 55 fließende Strom von der Sensorvorrichtung 86 gemessen wird und anschließend über die Leitung 87 an die Steuervorrichtung 2 weitergeleitet wird. Die Sensorvorrichtung 86 kann beispielsweise durch einen Shunt, einen Stromwandler oder einen Strombildner gebildet werden.

Weiters weist das Schweißgerät 1 beispielsweise einen weiteren Energiespeicher 88, der wiederum durch einen Elko 89 gebildet sein kann, auf. Der Energiespeicher 88 ist wiederum über Leitungen 90, 91 mit der Ladevorrichtung 10 verbunden. Bei dem dargestellten Ausführungsbeispiel ist nunmehr die Ladevorrichtung 10 derartig ausgebildet, daß zwei unterschiedliche Ladevorgänge von der Ladevorrichtung 10 durchgeführt werden können, d. h. daß beispielsweise der Energiespeicher 88 mit unterschiedlicher Energie gegenüber den Energiespeichern 22 bis 24, die für den Schweißprozeß zur Bildung der Energieimpulse 74 bis 76 verwendet werden, geladen wird. Weiters ist zwischen dem Energiespeicher 88 und der Ladevorrichtung 10 eine weitere Diode 92 angeordnet.

Damit der Energiespeicher 88 über die Übertragungsvorrichtung 31 entladen werden kann, ist für den Energiespeicher 88 eine weitere Schaltvorrichtung 93 angeordnet, wobei die Schaltvorrichtung 93 über eine Leitung 94 mit der Leitung 91, insbesondere mit dem Trafo 48 und über eine weitere Leitung 95 mit der Leitung 36 verbunden ist. Das positive Potential des Energiespeicher 88 ist über eine Leitung 96 mit der Leitung 32, insbesondere mit dem Trafo 48 verbunden. Damit die Schaltvorrichtung 93 von der Steuervorrichtung 2 angesteuert werden kann, ist die Schaltvorrichtung 93 über eine Steuerleitung 97 mit der Steuervorrichtung 2 verbunden.

Durch eine derartige Anordnung des Energiespeichers 88 ist es nunmehr möglich, daß durch Ansteuern der Schaltvorrichtung 93 von der Steuervorrichtung 2 die in dem Energiespeicher 88 gespeicherte Energie über die Übertragungsvorrichtung 31 entladen werden kann, wie dies bereits in den zuvor beschriebenen Figuren erläutert ist. Der Energiespeicher 88 ist mit der Übertragungsvorrichtung 31 derartig verbunden, daß dieser beim Entladen über die Übertragungsvorrichtung 31 eine entgegengesetzte Polarität als die Energiespeichern 22 bis 24 aufweist, d. h. daß beim Entladen des Energiespeichers 88 ein Negativimpuls an die Elektrode 53 angelegt wird, wogegen beim Entladen der Energiespeicher 22 bis 24 ein positiver Impuls an die Elektrode 53 angelegt wird. Der Vorteil eines negativen Impulses liegt darin, daß dieser Impuls zum Entmagnetisieren des Trafos 48 herangezogen werden kann, sodaß ein kleinerer Trafo 48, beispielsweise ohne Luftspalt für ein derartiges Schweißgerät 1 eingesetzt werden kann.

Bei dem über den Energiespeicher 88 erzeugten Impuls handelt es sich um einen Sensorimpuls 98, wie dieser in den Figuren 6 und 7 dargestellt ist. Dieser Sensorimpuls 98 hat die Aufgabe, den Übergangswiderstand zwischen der Elektrode 53 und dem Werkstück 54 zu ermitteln. Dies geschieht insofern, indem vor einem Schweißprozeß bzw. vor zumindest einem Energieimpulse 74 bis 76 zumindest ein Sensorimpuls 98 ausgesandt wird. Der Sensorimpuls 98 weist eine geringere Amplitudenhöhe bzw. Zeitdauer gegenüber den Energieimpulsen 74 bis 76 auf. Durch das Anlegen des Sensorimpulses 98 mit einer voreinstellbaren Amplitudenhöhe wird erreicht, daß der über die Leitung 55 fließende Strom von der Sensorvorrichtung 86 erfaßt wird. Daraufhin wird von der Sensorvorrichtung 86 der gemessene Stromfluß an die Steuervorrichtung 2 weitergeleitet, wodurch aufgrund der Amplitudenhöhe und den gemessenen Stromfluß der Übergangswiderstand zwischen der Elektrode 53 und dem Werkstück 54 errechnet werden kann. Selbstverständlich ist es möglich, daß der Sensorimpuls 98 dieselbe Polarität, wie die Energieimpulse 74 bis 76 aufweisen kann.

In Fig. 6 ist ein Verfahrensablauf eines Schweißprozesses gezeigt, bei dem vor dem Aussenden von zumindest einem der Energieimpulse 74 bis 76 der Sensorimpuls 98 ausgesandt wird. Durch das Ermitteln des Übergangswiderstandes ist es nunmehr möglich, daß die Steuervorrichtung 2 die Energieimpulse 74 bis 76 an den ermittelten Übergangswiderstand anpassen kann, d. h. daß beispielsweise der ermittelte Übergangswiderstand mit einem in einem Speicher der Steuervorrichtung 2 hinterlegten Wert verglichen wird, wobei bei Abweichen über einem bestimmten Toleranzbereich die gespeicherte Energie der voreingestellten Energieimpulse 74 bis 76 an den ermittelten Übergangswiderstand angepaßt wird, bzw. daß ein Warnsignal vom Schweißgerät 1, insbesondere von der Steuervorrichtung 2, ausgesandt wird.

Nach dem Schweißprozeß, also nach Abgabe der einzelnen Energieimpulse 74 bis 76 bzw. des Sensorimpuls 98 wird ein Ladezyklus für die einzelnen Energiespeicher 22 bis 24 und 88 durchgeführt, sodaß für einen neuerlichen Schweißvorgang wiederum ein Sensorimpuls 98 bzw. die einzelnen Energieimpulse 74 bis 76 ausgesandt werden können.

Bei dem in Fig. 7 dargestellten Funktionsablaufes eines Verfahrens für ein Schweißgerät 1 wird vor jedem Energieimpuls 74 bis 76 ein eigener Sensorimpuls 98 ausgesandt. Der Vorteil liegt darin, daß dadurch bei Veränderung des Übergangswiderstandes der über den Sensorimpuls 98 ermittelt wird, die Steuervorrichtung 2 ein Warnsignal aussenden kann, bzw. den Schweißprozeß vorm Aussenden des nächsten Energieimpulses 74 bis 76 unterbrechen kann, sodaß Einbrände bzw. Schweißspritzer an der Schweißstelle verhindert werden können.

Bei einem derartigen Schweißgerät 1, insbesondere bei einem Widerstandsschweißgerätes, beruht die Funktion eines Schweißprozesses darauf, daß an der Schweißstelle ein bestimmter Übergangswiderstand zwischen Elektrode 53 und Werkstück 54 vorhanden sein muß. Die Größe des Übergangswiderstandes ist abhängig von den verwendeten Materialien, wie beispielsweise der Elektrode 53, dem Schweißzusatzwerkstoff, dem Material bzw. dem Werkstoff des Werkstückes 54, der Oberflächenbeschaffenheit des Werkstückes 54, der Übergangsfläche und der Anpreßkraft der Elektrode 53 am Werkstück 54. Diese unterschiedlichen Größen eines Schweißprozesses können über die Ein- bzw. Ausgabevorrichtung 5 voreingestellt werden, wodurch ein entsprechend an die einzelnen Materialien angepaßter Sensorimpuls 98 generiert werden kann. Dies ist insofern möglich, da über die Ladevorrichtung 10 das Laden des Energiespeichers 88 durch die Übergabe eines entsprechenden Soll-Wertes von der Steuervorrichtung 2 gesteuert werden kann.

Die Qualität einer Schweißung wird durch den Grad der Verschmelzung des Zusatzwerkstoffes, insbesondere des Schweißzusatzwerkstoffes, und dem Werkstück 54 bestimmt, d. h. daß durch das Anlegen eines Energieimpulses 74 bis 76 an die Schweißstelle, also an die Elektrode 53, ein in Abhängigkeit des Übergangswiderstandes zwischen der Elektrode 53 und dem Werkstück 54 entsprechender Schweißstrom entsteht, der die Schweißstelle erwärmt und die Verschmelzung des Schweißzusatzwerkstoffes mit dem Werkstück 54 verursacht. Ist dieser Übergangswiderstand z. B. zu klein, so tritt keine Verschmelzung des Schweißzusatzwerkstoffes mit dem Werkstück 54 ein, wogegen bei zu großem Übergangswiderstand es zum Verdampfen bzw. zum Verbrennen des Schweißzusatzwerkstoffes führen kann, sodaß es zu ungewollten Einbränden bzw. Schweißspritzern an der Schweißstelle des Werkstückes 54 und/oder des Schweißzusatzwerkstoffes kommen kann.

Durch das Aussenden des Sensorimpulses 98 ist es nun möglich, daß der Übergangswiderstand zwischen der Elektrode 53 und dem Werkstück 54 ermittelt wird, dazu wird vor dem Aussenden der eigentlichen Energieimpulse 74 bis 76, der Sensorimpuls 98 ausgesandt. Der Sensorimpuls 98 ist dabei in seiner Amplituden- und/oder Zeitdauer kleiner als die Energieimpulse 74 bis 76. Der Sensorimpuls 98 sollte dabei so dimensioniert werden, daß kein Aufschmelzen des Schweißzusatzwerkstoffes bzw. des Werkstückes 54 erfolgt.

Während der Aussendung des Sensorimpulses 98 wird der über die Leitung 55 bzw. über die Elektrode 53 fließende Strom von der Sensorvorrichtung 86 gemessen und wird über die Leitung 87 an die Steuervorrichtung 2 weitergesandt. Aus dieser Messung der Sensorvorrichtung 86 kann nunmehr die Steuervorrichtung 2 den Übergangswiderstand an der Schweißstelle, insbesondere an der Elektrode 53 zum Werkstück 54 berechnen.

Nachdem von der Steuervorrichtung 2 der Übergangswiderstand errechnet wurde, wird von der Steuervorrichtung 2 der errechnete Übergangswiderstand mit einem, in einem Speicher hinterlegten, Wert verglichen. Dazu ist es möglich , daß mehrere unterschiedliche Werte in Abhängigkeit von unterschiedlichen Einstellungen des Schweißgerätes 1 in einem Speicher hinterlegt sein können. Liegt der ermittelte Übergangswiderstand bei einer entsprechenden Einstellung in einem definierten Toleranzbereich, so wird von der Steuervorrichtung 2 der Schweißprozeß zum Aussenden der Energieimpulse 74 bis 76 gestartet, wie dies bereits in den Figuren 1 bis 4 beschrieben ist.

Liegt der Übergangswiderstand jedoch außerhalb des vordefinierten Toleranzbereiches, so ist es möglich, daß von der Steuervorrichtung 2 ein Warnsignal ausgesandt wird, wobei gleichzeitig der Schweißvorgang unterbrochen wird bzw. die Abgabe der Energieimpulse 74 bis 76 gesperrt wird. Selbstverständlich ist es möglich, daß die Energieimpulse 74 bis 76 an den Übergangswiderstand angepaßt werden können, d.h. daß beispielsweise die Amplitudenhöhe und/oder die Zeitdauer der Energieimpulse 74 bis 76 von der Steuervorrichtung 2 verändert wird, d.h. daß beispielsweise die Energiespeicher 22 bis 24 über eine zum Stand der Technik zählende Entladevorrichtung auf einen entsprechenden Wert entladen werden bzw. daß nur eine bedingte Abgabe der gespeicherten Energie der Energiespeicher 22 bis 24 durchgeführt wird. Durch die Anpassung der Energieimpulse 74 bis 76 wird erreicht, daß ein dem Übergangswiderstand entsprechender Strom über die Elektrode 53 fließt, sodaß das Entstehen eines Einbrandes bzw. von Schweißspritzer an der Schweißstelle verhindert wird.

Weiters ist es möglich, daß zur Begrenzung eines zu hohen Stromflusses eine Strombegrenzungsvorrichtung im Schweißgerät 1 angeordnet ist, sodaß durch entsprechendes Ansteuern der Strombegrenzungsvorrichtung nur ein definierter Stromfluß mit einer entsprechenden Höhe über die Elektrode 53 entstehen kann.

Weiters wäre es möglich, daß anstelle der Sensorvorrichtung 86 in der Leitung 55 eine Überwachung des Primärstromkreises, also in der Leitung 32, durchgeführt werden kann. Dazu muß jedoch für die Berechnung des Übergangswiderstandes bei einer Messung des Primärstromes des Trafos 48 der Magnetisierungsstrom des Trafos 48 mitberücksichtigt werden.

Abschließend sei der Ordnung halber darauf hingewiesen, daß in den Zeichnungen einzelne Bauteile und Baugruppen zum besseren Verständnis der Erfindung nur schematisch dargestellt sind.

Es können auch einzelne Merkmale der einzelnen Ausführungsbeispiele mit anderen Einzelmerkmalen von anderen Ausführungsbeispielen oder jeweils für sich allein den Gegenstand von eigenständigen Erfindungen bilden.

Vor allem können die einzelnen in den Fig. 1; 2 bis 4; 5 bis 7 gezeigten Ausführungsbeispiele den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Schweißgerät
- 2: Steuervorrichtung
- 3: Mikroprozessorsteuerung
- 4: Leitung
- 5: Ein- und/oder Ausgabevorrichtung
- 6: LCD-Anzeige
- 7: Bedienerfeld
- 8: Versorgungsleitung
- 9: Versorgungsleitung
- 10: Ladevorrichtung
- 11: Leitung
- 12: Leitung
- 13: Spannungsversorgungsnetz
- 14: Filteranordnung
- 15: Ausgang
- 16: Ausgang
- 17: Ladeleitung
- 18: Ladeleitung
- 19: Leitung
- 20: Leitung
- 21: Leitung
- 22: Energiespeicher
- 23: Energiespeicher
- 24: Energiespeicher
- 25: Diode
- 26: Diode
- 27: Diode
- 28: Elko
- 29: Elko
- 30: Elko
- 31: Übertragungsvorrichtung
- 32: Leitung
- 33: Schaltvorrichtung
- 34: Schaltvorrichtung
- 35: Schaltvorrichtung
- 36: Leitung
- 37: Leitung
- 38: Leitung
- 39: Leitung
- 40: Leitung
- 41: Leitung
- 42: Leitung
- 43: Leitung
- 44: Leitung
- 45: Optokopler
- 46: Optokopler
- 47: Optokopler
- 48: Trafo
- 49: Primärspule
- 50: Sekundärspule
- 51: Verbrauch
- 52: Schweißbrenner
- 53: Elektrode
- 54: Werkstück
- 55: Leitung
- 56: Leitung
- 57: Meßvorrichtung
- 58: Meßvorrichtung
- 59: Meßvorrichtung
- 60: Meßvorrichtung
- 61: Leitung
- 62: Leitung
- 63: Leitung
- 64: Leitung
- 65: Startschalter
- 66: Leitung
- 67: Leitung
- 68: Ausgangskennlinie
- 69: Ladezyklus
- 70: Zeitpunkt
- 71: Amplitude
- 72: Zeitdauer
- 73: Zeitdauer
- 74: Energieimpuls
- 75: Energieimpuls
- 76: Energieimpuls
- 77: Zeitdauer
- 78: Zeitdauer
- 79: Zeitdauer
- 80: Zeitdauer
- 81: Zeitdauer
- 82: Zeitdauer
- 83: Zeitdauer
- 84: Amplitude
- 85: Amplitude
- 86: Sensorvorrichtung
- 87: Leitung
- 88: Energiespeicher
- 89: Elko
- 90: Leitung
- 91: Leitung
- 92: Diode
- 93: Schaltvorrichtung
- 94: Leitung
- 95: Leitung
- 96: Leitung
- 97: Steuerleitung
- 98: Sensorimpuls

## Patentansprüche

1. Schweißgerät, insbesondere Widerstandsschweißgerät, bestehend aus einer Steuervorrichtung, einer Ladevorrichtung, zumindest einem Energiespeicher, einer Schaltvorrichtung und einem Verbraucher, wobei der Energiespeicher zur Ladevorrichtung parallel geschaltet ist und dieser und über die ihm zugeordnete Schaltvorrichtung und einer dieser nachgeordneten Übertragungsvorrichtung mit dem Verbraucher, insbesondere einem Schweißbrenner mit einer nichtabschmelzenden Elektrode und einem Werkstück, verbunden ist, dadurch gekennzeichnet, daß mehrere Energiespeicher (22 bis 24) mit jeweils einer jedem derselben zugeordneten Schaltvorrichtung (33 bis 35) angeordnet sind und die Schaltvorrichtungen (33 bis 35) der Energiespeicher (22 bis 24) zwischen zwei Ladezyklusse (69) durch die Steuervorrichtung (2) zur unmittelbar aufeinanderfolgenden Abgabe von zumindest einem Teil der in jedem der Energiespeicher (22 bis 24) gespeicherten Energie an den Verbraucher (51) angesteuert sind.

2. Schweißgerät nach Anspruch 1, dadurch gekennzeichnet, daß für jeden Energiespeicher (22 bis 24) jeweils eine eigene Ladevorrichtung (10) angeordnet ist.

3. Schweißgerät nach Anspruch 1 oder 2, dadurch gekennzeichnet, daß jeder Energiespeicher (22 bis 24) unabhängig von den anderen Energiespeichern (22 bis 24) über eine Schaltvorrichtung mit der Ladevorrichtung (10) verbindbar sind.

4. Schweißgerät nach einem oder mehreren der vorhergehenden Ansprüche, dadurch gekennzeichnet, daß an der Steuervorrichtung (2) des Schweißgerätes (1) eine Einund/oder Ausgabevorrichtung (5) angeschlossen ist.

5. Schweißgerät nach einem oder mehreren der vorhergehenden Ansprüche, dadurch gekennzeichnet, daß die Ladevorrichtung (10) unter Zwischenschaltung einer Filteranordnung (14) mit einer Spannungsquelle, insbesondere einem öffentlichen Netz eines Spannungsversorgungsnetzes (13), verbunden ist.

6. Schweißgerät nach einem oder mehreren der vorhergehenden Ansprüche, dadurch gekennzeichnet, daß zum Aktivieren eines Schweißprozesses ein Startschalter (65) mit der Steuervorrichtung (2) verbunden ist.

7. Schweißgerät nach einem oder mehreren der vorhergehenden Ansprüche, dadurch gekennzeichnet, daß zwischen dem Schweißbrenner (52) und der Übertragungsvorrichtung (31) eine Sensorvorrichtung (86) angeordnet ist.

8. Schweißgerät nach einem oder mehreren der vorhergehenden Ansprüche, dadurch gekennzeichnet, daß die Sensorvorrichtung (86) beispielsweise durch einen Shunt, einen Stromwandler oder einen Strombildner gebildet ist.

9. Verfahren zur Abgabe von mehreren Energieimpulsen an einem an einer Schweißstelle angeordneten Verbraucher, insbesondere zum Widerstandsschweißen, bei dem durch das Aktivieren der Schaltvorrichtung eine in zumindest einem Energiespeicher gespeicherte Energie in Form eines Energieimpulses an den Verbraucher, insbesondere an einem Schweißbrenner mit einer nichtabschmelzenden Elektrode und einem Werkstück, angelegt wird, worauf der Energiespeicher über eine Ladevorrichtung wieder mit Energie aufgeladen wird, insbesondere zur Verwendung bei einem Schweißgerät nach Anspruch 1, dadurch gekennzeichnet, daß während eines Schweißzyklusses mehrere Energieimpulse von mehreren Energiespeichern durch aufeinanderfolgendes Aktivieren der diesen zugeordneten Schaltvorrichtungen mit einer voreinstellbaren Zeitdauer aufeinanderfolgend an den Verbraucher angelegt werden, worauf anschließend in einem Ladezyklus die Energiespeicher gleichzeitig oder aufeinanderfolgend von zumindest einer Ladevorrichtung wieder mit Energie aufgeladen werden.

10. Verfahren nach Anspruch 9, dadurch gekennzeichnet, daß durch die Ein-und/ oder Ausgabevorrichtung die Zeitdauer jedes Energieimpulses sowie die Amplitude desselben unabhängig eingestellt werden kann.

11. Verfahren nach Anspruch 9 oder 10, dadurch gekennzeichnet, daß die Zeitdauer zwischen zwei aufeinanderfolgenden Energieimpulsen jeweils unabhängig eingestellt werden kann.

12. Verfahren nach einem oder mehreren der vorhergehenden Ansprüche, dadurch gekennzeichnet, daß die Zeitdauer der Ladezyklen unabhängig von der Ladezeit der Energiespeicher eingestellt werden kann.

13. Verfahren nach einem oder mehreren der vorhergehenden Ansprüche, dadurch gekennzeichnet, daß die Zeitdauer über die die Energieimpulse an den Verbraucher abgegeben werden unabhängig von der Zeitdauer des Ladezyklusses eingestellt werden kann.

14. Verfahren zur Abgabe von zumindest einem Energieimpuls an einem an einer Schweißstelle angeordneten Verbraucher, insbesondere zum Widerstandsschweißen, bei dem durch das Aktivieren einer Schaltvorrichtung eine in zumindest einem Energiespeicher gespeicherten Energie in Form eines Energieimpulses an den Verbraucher, insbesondere an einen Schweißbrenner mit nichtabschmelzender Elektrode, und einem Werkstück angelegt wird, worauf der Energiespeicher über eine Ladevorrichtung wieder mit Energie aufgeladen wird, insbesondere zur Verwendung eines Schweißgerätes, nach einem oder mehreren der Ansprüche 1 bis 8, sowie für das Verfahren nach einem oder mehreren der Ansprüche 9 bis 13, dadurch gekennzeichnet, daß vor einem Schweißprozeß zumindest ein voreinstellbarer Sensorimpuls an den Verbraucher angelegt wird, wobei während des Sensorimpulses von einer Sensorvorrichtung der fließende Strom gemessen wird, worauf aufgrund des ermittelten Stromes von der Steuervorrichtung der Übergangswiderstand zwischen der nicht abschmelzenden Elektrode und dem Werkstück errechnet wird.

15. Verfahren nach Anspruch 14, dadurch gekennzeichnet, daß der Sensorimpuls in seiner Amplitudenhöhe und/oder seiner Zeitdauer kleiner als der Energieimpuls festgelegt wird.

16. Verfahren nach einem der Ansprüche 14 oder 15, dadurch gekennzeichnet, daß der errechnete Übergangswiderstand mit einem in einem Speicher der Steuervorrichtung hinterlegten Wert verglichen wird, wobei bei Abweichung über einen vorgegebenen Toleranzbereich beispielsweise ein Warnsignal ausgesendet wird.

17. Verfahren nach einem oder mehreren der vorhergehenden Ansprüche 14 bis 16, dadurch gekennzeichnet, daß entsprechend dem errechneten Übergangswiderstand von der Steuervorrichtung der Energieimpuls festgelegt wird bzw. korrigiert wird.

18. Verfahren nach einem oder mehreren der vorhergehenden Ansprüche 14 bis 17, dadurch gekennzeichnet, daß der Sensorimpuls eine positive oder negative Polarität aufweisen kann.

19. Verfahren nach einem oder mehreren der vorhergehenden Ansprüche 14 bis 18, dadurch gekennzeichnet, daß der Sensorimpuls vor jedem Energieimpuls oder vor einem aus mehreren Energieimpulsen gebildeten Schweißzyklus ausgesandt wird.
